(19) Europäisches Patentamt
European Patent Office
Office européen des brevets

(11) **EP 1 170 877 B1**

(12) **FASCICULE DE BREVET EUROPEEN**

(45) Date de publication et mention
de la délivrance du brevet:
**29.10.2008 Bulletin 2008/44**

(51) Int Cl.:
***H04B 3/23*** *(2006.01)*

(21) Numéro de dépôt: **01410083.8**

(22) Date de dépôt: **05.07.2001**

(54) **Annuleur d'écho**

Echounterdrückung

Echo canceller

(84) Etats contractants désignés:
**DE FR GB IT**

(30) Priorité: **05.07.2000 FR 0008745**

(43) Date de publication de la demande:
**09.01.2002 Bulletin 2002/02**

(73) Titulaire: **STMicroelectronics S.A.**
**92120 Montrouge (FR)**

(72) Inventeur: **Glass, William**
**38170 Seyssinet-Pariset (FR)**

(74) Mandataire: **de Beaumont, Michel**
**Cabinet Michel de Beaumont**
**1, rue Champollion**
**38000 Grenoble (FR)**

(56) Documents cités:
**EP-A- 0 798 877        US-A- 5 418 778**
**US-A- 5 920 548**

**Description**

La présente invention concerne les circuits permettant l'émission et la réception simultanées de signaux (communications "full duplex") par l'intermédiaire d'une ligne de transmission, et en particulier des circuits de ce type comportant un annuleur d'écho.

Les communications communément appelées "full duplex" (émission et réception simultanées des signaux) peuvent être de deux types différents. Dans un premier type, les signaux sont émis et reçus sur des plages de fréquence différentes et, dans un second type, ils sont émis et reçus sur une même plage de fréquence.

Lorsque les signaux émis et reçus se trouvent dans la même plage de fréquence, il se produit en réception une superposition des signaux émis et reçus et un "annuleur d'écho" est nécessaire pour soustraire des signaux reçus la fraction des signaux émis qui se retrouve en réception.

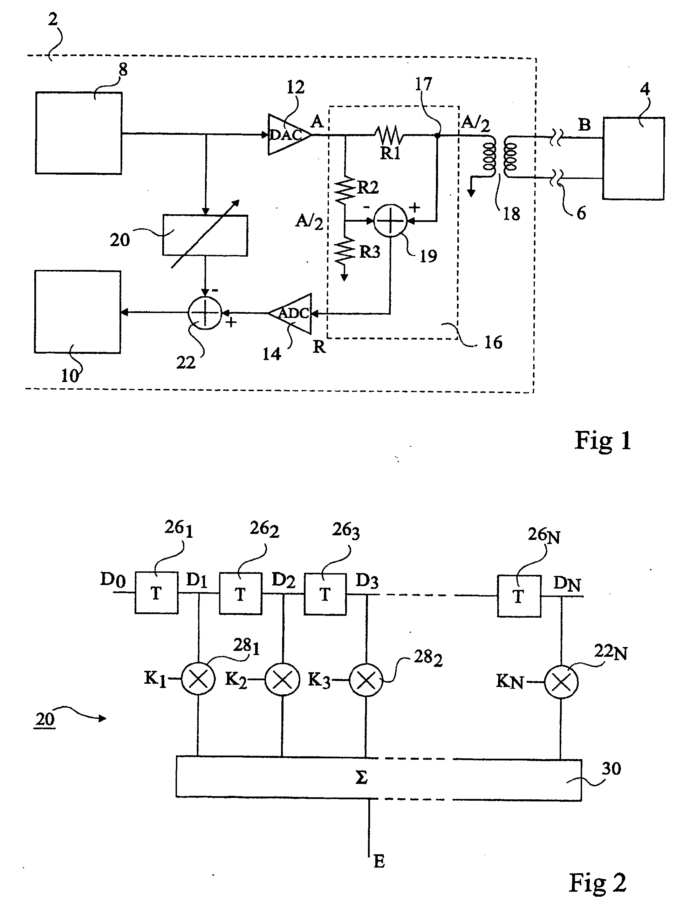

La figure 1 représente un circuit classique 2 comportant un tel annuleur d'écho. Le circuit 2 est prévu pour échanger des signaux avec un central 4 par l'intermédiaire d'une ligne de transmission bifilaire 6. Le circuit 2 comprend un bloc numérique d'émission 8 et un bloc numérique de réception 10. Le bloc 8 peut recevoir les signaux à émettre d'un microprocesseur (non représenté) et le bloc 10 peut fournir les signaux reçus au microprocesseur, qui les traite. Le circuit 2 fait alors office de modem. Un convertisseur numérique-analogique (DAC) 12 convertit le signal numérique fourni par le bloc d'émission 8 en un signal de sortie analogique A. Un convertisseur analogique-numérique (ADC) 14 convertit le signal analogique R correspondant au signal reçu en un signal numérique fourni au bloc de réception 10.

Un module analogique 16 est disposé entre la sortie du convertisseur 12, l'entrée du convertisseur 14 et une borne 17 connectée à une extrémité d'un enroulement primaire d'un transformateur d'isolation 18. L'autre extrémité de l'enroulement primaire du transformateur 18 est reliée à la masse, et les deux extrémités de l'enroulement secondaire du transformateur 18 sont chacune reliée à un fil de la ligne 6. Le module 16 comprend une résistance R1 connectée entre la sortie du convertisseur 12 et la borne 17. Le module 16 comprend également un diviseur de tension formé de deux résistances R2 et R3 connectées en série entre la sortie du convertisseur 12 et la masse. Un soustracteur analogique 19 est connecté pour soustraire le signal fourni par le diviseur de tension au signal présent sur la borne 17. La sortie du soustracteur 19 est reliée à l'entrée du convertisseur 14.

La valeur de la résistance R1 est égale à l'impédance de la ligne, vue du primaire du transformateur 18. Par conséquent, le signal A étant fourni par le convertisseur 12, un signal A/2 se retrouve sur la borne 17. Par ailleurs, les valeurs des résistances R2 et R3 sont égales et le diviseur de tension fournit un signal A/2 en son point milieu. Lorsqu'un signal B est fourni par le central 4, un signal A/2 + B est présent sur la borne 17, et, en sortie du soustracteur 19, le signal est : R = A/2 + B - A/2, c'est-à-dire B. De cette manière, le signal R fourni au convertisseur 14 est exempt de perturbations provenant du signal émis A.

En pratique, il est difficile d'ajuster parfaitement la résistance R1 à l'impédance de la ligne, qui peut d'ailleurs comporter une composante réactive. Le circuit 10 reçoit alors un signal d'écho, dit "d'écho proche". Cet écho proche est dû à une fraction du signal A qui se retrouve dans le signal R sans avoir traversé la ligne de transmission. Le circuit reçoit également un signal d'écho dit "d'écho lointain", plus faible, dû à la réflexion du signal émis en fin de ligne de transmission. La présente invention ne traite pas du signal d'écho lointain, et le terme "écho" désigne par la suite l'écho proche uniquement.

Quand il y a un écho $\Delta A$, le signal R est égal à B + $\Delta A$. Afin de supprimer le signal d'écho $\Delta A$, le circuit 2 comprend un annuleur d'écho numérique couplé entre la sortie du bloc 8, la sortie du convertisseur 14 et l'entrée du bloc 10. L'annuleur d'écho comprend un filtre numérique 20 destiné à produire un signal représentatif de l'écho et un soustracteur numérique 22 pour soustraire ce signal représentatif de l'écho au signal numérique produit par le convertisseur 14.

La figure 2 représente schématiquement un filtre 20 classique. Le filtre 20 comprend un nombre prédéterminé N d'éléments de retard $26_i$, où i est compris entre 1 et N, connectés en série. Le premier élément $26_1$ reçoit en entrée les échantillons correspondant au signal numérique fourni par le bloc 8. Les éléments $26_i$ introduisent chacun un retard égal à la période d'échantillonnage T du signal numérique émis. Pour chaque nouvel échantillon $D_0$ reçu en entrée de l'élément $26_1$, les éléments $26_i$ fournissent chacun un échantillon $D_i$ respectivement retardé de i périodes par rapport à l'échantillon $D_0$. Le filtre 20 comprend également N multiplieurs $28_i$. Chaque multiplieur $28_i$ est prévu pour multiplier un des échantillons retardés $D_i$ par un coefficient $K_i$. Le filtre 20 comprend un additionneur 30 qui effectue la somme des produits $K_i.D_i$. L'additionneur 30 fournit le signal de sortie du filtre 20, noté E, correspondant à une estimation de l'écho. Les coefficients $K_i$ sont produits par un moyen de calcul, non représenté pour des raisons de clarté.

Au début de chaque communication, une phase d'initialisation a lieu. Lors de cette phase d'initialisation, le central 4 n'émet aucun signal, le bloc 8 émet un signal A, et le signal R est égal à $\Delta A$ seulement. Chaque coefficient $K_i$, nul au départ de la phase d'initialisation, est calculé de manière itérative à l'aide de l'équation :

$$K_i(t) = K_i(t-1) + \varepsilon.Err(t).D_i(t) \qquad\qquad (1)$$

Deux itérations successives sont séparées d'un nombre entier de périodes T. $K_i(t)$ et $K_i(t-1)$ sont respectivement la valeur du coefficient $K_i$ à l'instant t de l'itération et lors de l'itération précédente, $\varepsilon$ est un facteur d'atténuation prédéterminé, $Err(t)$ et $D_i(t)$ sont respectivement le signal de sortie du soustracteur 22 et l'échantillon $D_i$ à l'instant t de l'itération. Le signal $Err(t)$ peut être positif ou négatif. Au cours de l'initialisation, la valeur des coefficients $K_i$ évolue jusqu'à ce que le signal $Err(t)$ soit sensiblement nul. Les valeurs des coefficients $K_i$ n'évoluent alors pratiquement plus et sont stockées dans une mémoire (non représentée).

Après la phase d'initialisation, l'échange de signaux commence et le central émet un signal B ; le convertisseur 14 reçoit un signal analogique R égal à B + $\Delta$A qu'il fournit, numérisé, au soustracteur 22. Le filtre 20 fournit le signal E correspondant à $\Delta$A et le bloc 10 reçoit un signal numérique sans écho.

Un inconvénient d'un tel dispositif est que les valeurs des coefficients $K_i$ sont fixées pendant toute la communication et correspondent aux conditions de fonctionnement du circuit 2 lors de la phase d'initialisation. Or, au cours du fonctionnement du circuit, les conditions de fonctionnement peuvent changer, et le signal d'écho estimé E peut ne plus être égal au signal réel d'écho. Par exemple, en fonctionnement, la température du circuit augmente et l'impédance du transformateur peut changer. Un tel phénomène se produit couramment lorsque la phase d'initialisation a lieu juste après la mise sous tension du circuit, et que la température du circuit 2 et du transformateur 18 augmente après la phase d'initialisation. L'écho, mal compensé, perturbe alors le signal de réception, et peut le rendre inutilisable.

Une solution consiste alors à interrompre la communication en cours, et à initier une nouvelle communication. Cela permet un nouveau calcul des coefficients $K_i$ au cours d'une nouvelle phase d'initialisation. Toutefois, cette solution "brutale" est parfois extrêmement gênante. Dans le cas d'une communication Internet, par exemple, une telle interruption peut amener une perte de la connexion.

Un objet de la présente invention est de prévoir un circuit disposant d'un annuleur d'écho qui fonctionne malgré des variations de conditions de fonctionnement entre les phases d'initialisation et de fonctionnement nominal.

Un autre objet de la présente invention est de prévoir un tel circuit qui soit facile à réaliser à partir d'une structure de circuit classique.

Pour atteindre ces objets, ainsi que d'autres, la présente invention prévoit un circuit pour émettre et recevoir des communications. Le circuit comprend un bloc d'émission, un bloc de réception, et un annuleur d'écho, couplé au bloc d'émission et au bloc de réception, pour déterminer un signal d'écho et le soustraire du signal reçu, la détermination du signal d'écho faisant intervenir un nombre prédéterminé N de coefficients calculés au début de chacune des communications lors d'une phase d'initialisation. Le circuit comprend des moyens pour mettre à jour périodiquement en cours de communication un groupe restreint de coefficients choisis parmi les coefficients les plus significatifs.

Selon un mode de réalisation de la présente invention, ledit groupe restreint est formé par le coefficient maximal obtenu à l'issue de la phase d'initialisation et un nombre défini de ses voisins.

Selon un mode de réalisation de la présente invention, ledit groupe restreint est formé par tous les coefficients dont la valeur à l'issue de la phase d'initialisation est supérieure à un seuil prédéterminé.

Selon un mode de réalisation de la présente invention, la détermination des coefficients lors de la phase d'initialisation et la mise à jour des coefficients dudit groupe restreint sont effectuées de façon itérative, le mode de calcul pour la mise à jour des coefficients dudit groupe faisant converger les coefficients plus lentement que le mode de calcul pour la détermination des coefficients lors de la phase d'initialisation.

Selon un mode de réalisation de la présente invention, l'annuleur d'écho comprend un filtre recevant des échantillons émis par le bloc d'émission et fournissant le signal d'écho à une première entrée d'un soustracteur dont une seconde entrée reçoit des échantillons reçus par le circuit et dont la sortie est connectée à l'entrée du bloc de réception.

Selon un mode de réalisation de la présente invention, le filtre comprend :

N éléments de retard connectés en série, recevant les échantillons émis,

N multiplieurs, chaque multiplieur étant prévu pour multiplier par un des coefficients l'échantillon en sortie de l'élément de retard de même rang, et

un additionneur pour faire la somme des signaux en sortie des multiplieurs.

La présente invention prévoit aussi un procédé d'annulation d'écho dans un circuit propre à émettre et/ou recevoir un signal respectivement émis et/ou reçu, dans lequel un signal représentatif de l'écho est soustrait au signal reçu, le signal représentatif de l'écho étant déterminé en faisant la somme de N termes, chaque terme étant obtenu en multipliant un échantillon de rang i du signal émis par un coefficient de rang i, i étant compris entre 1 et N. Le procédé comprend les étapes suivantes :

lors d'une phase d'initialisation correspondant au début d'une communication, déterminer la valeur des N coefficients de rang i,

déterminer les coefficients les plus significatifs, et

au cours de la communication, mettre à jour les coefficients d'un groupe restreint desdits coefficients choisis parmi les coefficients les plus significatifs.

Ces objets, caractéristiques et avantages, ainsi que d'autres de la présente invention seront exposés en détail dans la description suivante de modes de réalisation particuliers faite à titre non-limitatif en relation avec les figures jointes parmi lesquelles :

la figure 1, précédemment décrite, représente un circuit classique comportant un annuleur d'écho ;
la figure 2, précédemment décrite, représente schématiquement un filtre de l'annuleur d'écho de la figure 1 ; et
la figure 3 représente un diagramme illustrant schématiquement les valeurs de coefficients utilisés dans le filtre de la figure 2.

Selon la présente invention, on identifie parmi les coefficients $K_i$, à l'issue de la phase d'initialisation, un groupe restreint de coefficients significatifs. Ensuite, lors du fonctionnement du circuit, on met périodiquement à jour ce groupe restreint de coefficients seulement. La demanderesse a élaboré cette solution après diverses études qui lui ont montré, entre autres, l'impossibilité de mettre à jour périodiquement tous les coefficients du filtre 20.

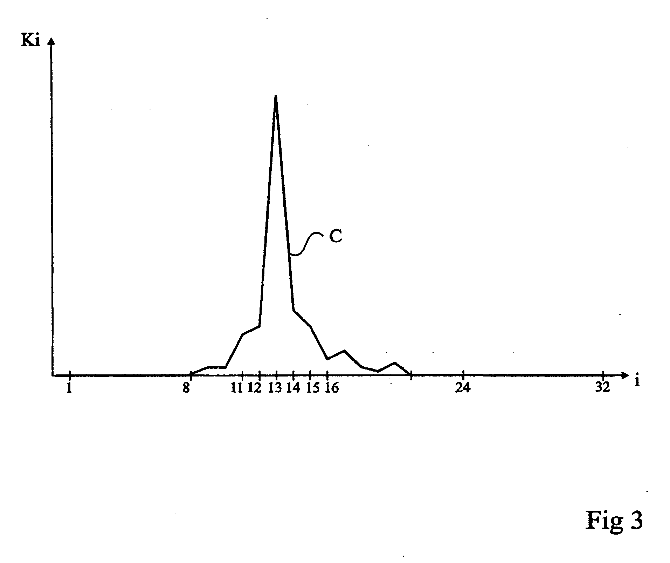

La figure 3 représente une courbe C illustrant la valeur des coefficients du filtre 20 obtenus à l'issue d'une phase d'initialisation. On a représenté ici N = 32 coefficients, mais en pratique, le nombre N peut être quelconque. De façon très générale, des tests ont montré que la courbe C présente un pic, et que le nombre des coefficients significatifs est peu élevé. Selon la présente invention, le coefficient retenu comme étant le plus significatif est le coefficient correspondant au pic de la courbe d'initialisation. En figure 3, le coefficient maximal est le treizième coefficient, $K_{13}$. Les autres coefficients significatifs peuvent être déterminés de plusieurs manières.

Selon un mode de réalisation de la présente invention, les autres coefficients retenus sont les coefficients de rang immédiatement voisin de celui du coefficient maximal. Le nombre de coefficients retenus est un nombre prédéterminé. Ce nombre peut être fixé, par exemple en fonction du nombre total de coefficients, ou peut être déterminé automatiquement à partir de la courbe C par des moyens de calcul appropriés. En figure 3, on choisit par exemple un groupe de cinq coefficients significatifs $K_j$ comprenant les coefficients de rang 11, 12, 13, 14 et 15.

Lorsque le circuit fonctionne, la présente invention prévoit de mettre à jour périodiquement les coefficients significatifs selon la formule :

$$K_j(t) = K_j(t-1) + \varepsilon'.Err(t).D_j(t) \qquad (2)$$

où j est le rang de l'un quelconque des coefficients retenus (11, 12, 13, 14 ou 15 dans l'exemple donné), où $K_j(t)$ et $K_j(t-1)$ sont respectivement la valeur du coefficient $K_j$ à l'instant t de l'itération et lors de l'itération précédente, où $\varepsilon'$ est un facteur d'atténuation prédéterminé, et Err(t) et $D_j(t)$ sont respectivement le signal de sortie du soustracteur 22 et l'échantillon $D_j$ à l'instant t de l'itération.

Le moyen de calcul destiné à mettre en oeuvre la formule (2) peut être le même que le moyen de calcul destiné à mettre en oeuvre la formule (1), commandé pour ne traiter que le groupe restreint des coefficients $K_j$.

Le coefficient d'atténuation $\varepsilon'$ est choisi plus petit que le coefficient d'atténuation $\varepsilon$ de la phase d'initialisation.

En effet, une difficulté de la mise à jour des coefficients en cours de communication est que le signal reçu R comporte à la fois le signal émis par le central B et l'écho $\Delta A$, beaucoup plus faible que B. Si l'on prend un coefficient $\varepsilon'$ de l'ordre de $\varepsilon$, les itérations successives ne convergent pas et les coefficients prennent des valeurs aberrantes. Cependant, comme le signal B est en général très décorrélé par rapport à l'écho, il est possible, avec un coefficient $\varepsilon'$ plus faible que $\varepsilon$, de réduire la vitesse d'évolution des coefficients $K_j$ et d'obtenir leur convergence. Par exemple, $\varepsilon'$ pourra être choisi 8 fois inférieur à $\varepsilon$.

On notera que la mise à jour de l'ensemble des coefficients $K_i$ en cours de communication, même avec un $\varepsilon'$ très faible, est impossible en pratique car celle-ci est très lente et les coefficients obtenus ne peuvent pas suivre les dérives de la ligne.

Par contre, le choix d'un nombre restreint de coefficients à mettre à jour, associé à une valeur plus faible de $\varepsilon$, permet de suivre les modifications des conditions de fonctionnement du circuit. Ainsi, l'écho estimé reste continuellement proche de l'écho réel et le rapport signal sur bruit du signal fourni au bloc de réception 10 reste acceptable.

La mise à jour peut être réalisée de façon continuelle au cours de la communication. Dans ce cas, les coefficients du groupe restreint choisi seront mis à jour les uns après les autres, en commençant par exemple par le coefficient de valeur la plus élevée. Aussi, la mise à jour du groupe restreint peut être réalisée de manière périodique, un intervalle de temps séparant deux mises à jour successives.

Bien entendu, la présente invention est susceptible de diverses variantes et modifications qui apparaîtront à l'homme du métier.

Notamment, on a vu en relation avec la figure 3 que les coefficients significatifs retenus pouvaient être un nombre prédéterminé de coefficients au voisinage du coefficient maximum. Selon une variante de la présente invention, les coefficients retenus sont les coefficients dont la valeur, à l'issue de la phase d'initialisation, est supérieure ou égale à un pourcentage prédéterminé de la valeur du coefficient maximal. Dans cette variante, ce pourcentage peut être fixé en fonction du nombre total de coefficients, ou peut être déterminé automatiquement à partir de la courbe C par des moyens de calcul appropriés.

Aussi, la mise à jour des coefficients les plus significatifs $K_j$ a été décrite à l'aide de la formule (2), mais, dans une variante de la présente invention, dans le filtre décrit, chaque coefficient $K_j$ est calculé à partir du produit de la valeur de l'échantillon $D_j(t)$ fourni par l'élément de retard $26_j$ et de la sortie du soustracteur 22 $Err(t)$, mais l'homme du métier adaptera sans difficulté la présente invention à un filtre dans lequel chaque coefficient est initialisé à partir d'une moyenne des produits d'échantillons $D_j$ à $D_{j+k-1}$ et des sorties du soustracteur 22 $Err(t)$ à $Err(t-k+1)$, où la mise à jour est faite tous les k échantillons, selon la formule :

$$K_j(t) = K_j(t-kt) + \varepsilon' \sum_{l=0}^{l=k-1} Err(t-l).D_{(j+l)}(t),$$

1 étant une variable allant de 0 à k-1.

## Revendications

1.  Circuit pour émettre et recevoir des communications, comprenant :

   un bloc d'émission (8),
   un bloc de réception (10),
   un annuleur d'écho (20, 22), couplé au bloc d'émission et au bloc de réception, pour déterminer un signal d'écho et le soustraire du signal reçu, la détermination du signal d'écho faisant intervenir un nombre prédéterminé N de coefficients ($K_i$) calculés au début de chacune des communications lors d'une phase d'initialisation, et des moyens pour mettre à jour périodiquement en cours de communication un groupe restreint de coefficients choisis parmi les coefficients les plus significatifs,

   **caractérisé en ce que** ledit groupe restreint est formé par le coefficient maximal obtenu à l'issue de la phase d'initialisation et un nombre défini de ses voisins.

2.  Circuit selon la revendication 1, dans lequel la détermination des coefficients lors de la phase d'initialisation et la mise à jour des coefficients dudit groupe restreint sont effectuées de façon itérative, le mode de calcul pour la mise à jour des coefficients ($K_j$) dudit groupe faisant converger les coefficients plus lentement que le mode de calcul pour la détermination des coefficients ($K_i$) lors de la phase d'initialisation.

3.  Circuit selon la revendication 1 ou 2, dans lequel l'annuleur d'écho comprend un filtre (20) recevant des échantillons émis par le bloc d'émission et fournissant le signal d'écho à une première entrée d'un soustracteur (22) dont une seconde entrée reçoit des échantillons reçus par le circuit et dont la sortie est connectée à l'entrée du bloc de réception.

4.  Circuit selon la revendication 3, dans lequel le filtre (20) comprend :

   N éléments de retard ($26_i$) connectés en série, recevant les échantillons émis,
   N multiplieurs, chaque multiplieur ($28_i$) étant prévu pour multiplier par un des coefficients ($K_i$) l'échantillon en sortie de l'élément de retard de même rang ($26_i$), et
   un additionneur (30) pour faire la somme des signaux en sortie des multiplieurs.

5.  Procédé d'annulation d'écho dans un circuit propre à émettre et/ou recevoir un signal respectivement émis et/ou reçu, dans lequel un signal représentatif de l'écho est soustrait au signal reçu, le signal représentatif de l'écho étant déterminé en faisant la somme de N termes, chaque terme étant obtenu en multipliant un échantillon de rang i ($D_i$) du signal émis par un coefficient de rang i ($K_i$), i étant compris entre 1 et N, comprenant les étapes suivantes :

lors d'une phase d'initialisation correspondant au début d'une communication, déterminer la valeur des N coefficients de rang i ($K_i$),

déterminer les coefficients les plus significatifs, et

au cours de la communication, mettre à jour les coefficients ($K_j$) d'un groupe restreint desdits coefficients choisis parmi les coefficients les plus significatifs, ledit groupe restreint étant formé par le coefficient maximal obtenu à l'issue de la phase d'initialisation et un nombre défini de ses voisins.

**Claims**

1. A circuit for transmitting and receiving communications, including:

a transmit block (8),
a receive block (10),
an echo canceller (20, 22), coupled to the transmit block and to the receive block, for determining an echo signal and subtracting it from the received signal, the determination of the echo signal involving a predetermined number N of coefficients ($K_i$) calculated at the beginning of each communication in an initialization phase, and means for periodically updating during communication a restricted group of coefficients chosen from among the most significant coefficients,

**characterized in that** said restricted group is formed by the maximum coefficient obtained at the end of the initialization phase and a defined number of its neighbors.

2. The circuit of claim 1, wherein the determination of the coefficients in the initialization phase and the updating of the coefficients of said restricted group are performed iteratively, the calculation mode for the updating of the coefficients ($K_j$) of said group making the coefficients converge more slowly than the calculation mode for the determination of the coefficients ($K_i$) during the initialization phase.

3. The circuit of claim 1 or 2, wherein the echo canceller includes a filter (20) receiving samples transmitted by the transmit block and providing the echo signal to a first input of a subtractor (22), a second input of which receives samples received by the circuit, and the output of which is connected to the input of the receive block.

4. The circuit of claim 3, wherein the filter (20) includes:

N series-connected delay elements ($26_i$) receiving the transmitted samples,
N multipliers, each multiplier ($28_i$) being provided for multiplying by one of the coefficients ($K_i$) the sample at the output of the delay element of same rank ($26_i$), and
an adder (30) for summing up the signals at the output of the multipliers.

5. A method of echo canceling in a circuit adapted for transmitting and/or receiving a respectively transmitted and/or received signal, wherein a signal representative of the echo is subtracted from the received signal, the signal representative of the echo being determined by summing up N terms, each term being obtained by multiplying a sample of rank i ($D_i$) of the transmitted signal by a coefficient of rank i ($K_i$), i ranging between 1 and N, including the steps of:

in an initialization phase corresponding to the beginning of a communication, determining the value of the N coefficients of rank i ($K_i$),
determining the most significant coefficients, and
during the communication, updating the coefficients ($K_j$) of a restricted group of said coefficients chosen from among the most significant coefficients, said restricted group being formed by the maximum coefficient obtained at the end of the initialization phase and a defined number of its neighbors.

**Patentansprüche**

1. Eine Schaltung zum Senden und Empfangen von Kommunikationen bzw. Nachrichtenübermittlungen, wobei die Schaltung Folgendes beinhaltet:

   einen Sendeblock (8),
   einen Empfangsblock (10),
   einen Echo-Löscher (20, 22), gekoppelt mit dem Sendeblock und dem Empfangsblock, zum Bestimmen eines Echosignals und zum Subtrahieren des Echosignals von dem empfangenen Signal, wobei die Bestimmung von dem Echosignal eine vorherbestimmte Anzahl N von Koeffizienten ($K_i$) einbezieht, die an dem Beginn von jeder Kommunikation in einer Initialisierungsphase berechnet werden, und
   Mittel zum periodischen Aktualisieren während der Kommunikation einer beschränkten Gruppe von Koeffizienten die aus den signifikantesten Koeffizienten gewählt wurden,

   **dadurch gekennzeichnet, dass** die begrenzte Gruppe durch den maximalen Koeffizienten, der an dem Ende von der Initialisierungsphase erhalten wird, und einer vorher bestimmten Anzahl seiner Nachbarn, gebildet wird.

2. Schaltung nach Anspruch 1, wobei die Bestimmung von den Koeffizienten in der Initialisierungsphase und das Aktualisieren von den Koeffizienten von der begrenzten Gruppe iterativ durchgeführt werden, wobei der Berechnungsmodus für das Aktualisieren der Koeffizienten ($K_i$) von der Gruppe dazu führt, dass die Koeffizienten langsamer konvergieren als bei dem Berechnungsmodus für die Bestimmung von den Koeffizienten ($K_i$) während der Initialisierungsphase.

3. Schaltung nach Anspruch 1 oder 2, wobei der Echo-Löscher ein Filter (20) beinhaltet, welches Tastungen bzw. Abtastwerte empfängt, die durch den Sendeblock gesendet wurden und das Echosignal an einen ersten Eingang von einem Subtrahierer (22) liefert, wobei ein zweiter Eingang von dem Subtrahierer Tastungen empfängt, die durch die Schaltung empfangen wurden, und der Ausgang von dem Subtrahierer mit dem Eingang von dem Empfangsblock verbunden ist.

4. Schaltung nach Anspruch 3, wobei der Filter (20) Folgendes beinhaltet:

   N in Reihe verbundene Verzögerungselemente ($26_i$), die die gesendeten Tastungen empfangen,
   N Multiplizierer, wobei jeder Multiplizierer ($28_i$) vorgesehen ist zum Multiplizieren, mit einem von den Koeffizienten ($K_i$), die Tastung an dem Ausgang von dem Verzögerungselement von dem gleichen Rang ($26_i$) und einen Addierer (30) zum Aufsummieren der Signale an dem Ausgang von den Multiplizierern.

5. Ein Verfahren zum Echo-Löschen in einer Schaltung, die angepasst ist zum Senden und/oder Empfangen eines entsprechend gesendeten und/oder empfangenen Signals, wobei ein für das Echo repräsentatives Signal von dem empfangenen Signal subtrahiert wird, wobei das für das Echo repräsentative Signal bestimmt wird durch Aufsummieren von N Ausdrücken, wobei jeder Ausdruck erlangt wird durch Multiplizieren eines Abtastwerts bzw. einer Tastung vom Rang i ($D_i$) von dem gesendeten Signal mit einem Koeffizienten vom Rang i ($K_i$), wobei i im Bereich zwischen 1 und N ist,
   wobei das Verfahren die folgenden Schritte beinhaltet:

   in einer Initialisierungsphase entsprechend dem Beginn von einer Kommunikation, Bestimmen des Werts von den N Koeffizienten vom Rang i ($K_i$),
   Bestimmen der signifikantesten Koeffizienten und
   während der Kommunikation Aktualisieren der Koeffizienten ($K_i$) von einer begrenzten Gruppe von den Koeffizienten und zwar gewählt aus den signifikantesten Koeffizienten, wobei die begrenzte Gruppe gebildet wird durch den maximalen Koeffizienten, der an dem Ende von der Initialisierungsphase erlangt wird und einer definierten Anzahl von seinen Nachbarn.

Fig 1

Fig 2

Fig 3